# FASCICULE DE BREVET EUROPEEN

(11) **EP 2 729 710 B1**
(45) Date de publication et mention de la délivrance du brevet: **15.06.2016**
(21) Numéro de dépôt: 12738571.4
(22) Date de dépôt: 05.07.2012
(51) Int. Cl.: F16B 19/05

(54) **ORGANE DE FIXATION**
BEFESTIGUNGSELEMENT
ATTACHMENT MEMBER

(30) Priorité: 07.07.2011 FR 1156165
(43) Date de publication de la demande: 14.05.2014
(73) Titulaire: Eris, 31130 Flourens (FR)
(72) Inventeur: AURIOL, Pierre, F-31130 Flourens (FR)
(74) Mandataire: Richebourg, Michel François
(86) Numéro de dépôt international: PCT/FR2012/051589
(87) Numéro de publication internationale: WO 2013/004977

(56) Documents cités:
- US-A- 5 562 379
- US-A- 6 019 559

## Description

### DOMAINE D'APPLICATION DE L'INVENTION

La présente invention a trait au domaine des organes de fixation de type rivet et notamment aux adaptations permettant d'en améliorer les caractéristiques de résistance mécanique.

### DESCRIPTION DE L'ART ANTÉRIEUR

L'invention concerne notamment un organe de fixation en deux parties de type rivet tels ceux connus sous le nom commercial de "lockbolt".

Ce rivet tel celui décrit dans le document FR 2503805 comprend une broche et une bague, ladite broche comprenant à une extrémité une tête et présentant sur son corps une pluralité de rainures ou gorges de blocage permettant à la bague s'engageant sur la broche de venir s'y fixer par déformation.

Une telle configuration permet la fixation de pièces ensemble en perçant ces dernières d'un trou traversant, avec ladite tête venant en appui à une extrémité du trou et avec ladite bague servant, une fois déformée et fixée à la broche, de surface d'appui en vis-à-vis de la tête à l'autre extrémité du trou.

Ladite broche comprend une première partie rainurée à des fins de coopération avec la bague et une deuxième partie rainurée des fins de coopération avec l'outil assurant la tenue de la broche pendant le filage de la bague sur la première partie rainurée. Pour faciliter la fabrication de tels organes, les rainures de chaque partie sont classiquement identiques.

Cette deuxième partie rainurée de broche est séparée de la première par une rainure ou gorge plus profonde destinée à permettre la rupture de la broche, une fois un seuil d'effort de traction franchi.

Les caractéristiques mécaniques de la fixation obtenue comme la tenue à l'arrachement, dépendent donc principalement de la liaison entre la première partie rainurée de broche et ladite bague.

Les concepteurs de telles fixations ont mené des recherches afin améliorer lesdites caractéristiques.

Ainsi, par exemple, l'agrandissement de la longueur de broche et de la bague permettent d'augmenter les caractéristiques mécaniques, étant entendu qu'un tel agrandissement a pour conséquence d'augmenter d'autant la saillie constituée par la fixation et nécessite des outils avec une plus grande course.

Le choix judicieux des matériaux peut permettre d'améliorer les caractéristiques mécaniques mais un tel choix peut s'avérer onéreux et requérir des outillages spécifiques.

Comme décrits dans le document FR 2283347, des organes de fixation ont été conçus afin de proposer une première partie de broche rainurée à des fins de coopération avec la bague préformée avec des rainures adoptant un pas tendant à s'agrandir progressivement en s'éloignant de la tête. L'agrandissement du pas permet, avec une même profondeur, de permettre à plus de matière de la bague à venir coopérer avec la broche lors de sa déformation.

Néanmoins, la bague ne présente pas une déformation régulière sur toute sa longueur lui permettant de coopérer de façon égale avec chaque rainure. Classiquement, les extrémités de l'âme creuse de ladite bague ne remplissent pas les rainures correspondantes autant que sa partie centrale. Cette disparité est d'autant plus grande lors des conditions limites d'utilisation de l'organe de fixation c'est à dire :
- lorsque la longueur disponible de la première partie rainurée de la broche à des fins de coopération avec la bague est maximale et où l'épaisseur de l'assemblage est minimale (situation désignée ci-après grip mini), ou
- lorsque la longueur disponible de la première partie rainurée de la broche à des fins de coopération avec la bague est minimale et où l'épaisseur de l'assemblage est maximale (situation désignée ci-après "grip maxi").

Il apparaît alors que le nombre de rainures pleinement remplies diffère et peut ne pas être jugé suffisant. L'agrandissement progressif du pas des rainures ne garantit pas que le nombre de rainures pleinement remplies sera suffisant et ne permet pas non plus de garantir un nombre de rainures égal selon une situation de "grip maxi" ou selon une situation de "grip mini". Cette différence est d'autant plus dommageable dans une configuration à pas progressif du fait que, dans les deux situations décrites, ce n'est pas la même zone de première partie rainurée de broche qui est la plus concernée par l'accueil de la bague.

Ces variations dans le nombre et le type de rainures engagées rendent variables les caractéristiques de résistance mécanique de la fixation obtenue, selon que la fixation requise s'éloigne ou se rapproches des conditions limites d'utilisation.

Il existe également le document US6019559 qui décrit une fixation améliorée comprenant une broche et une bague. La broche comprend une portion de préhension préformée de rainures coniques selon une spirale ou une hélicoïde. La bague est sertie sur cette portion de préhension, puis est déformée afin d'autoriser son dévissement.

Ce document décrit des rainures formant une hélicoïde avec des rainures droites (non spiralées) disposées aux deux extrémités de la portion spiralée. L'objet des rainures disposées aux deux extrémités de la partie filetée est de créer un arrêt axial évitant un dévissage non souhaité. Ces deux rainures n'ont pas le même diamètre ni la même largeur. Les caractéristiques proposées n'ont pas pour objet l'amélioration des performances mécaniques dans les plages limites d'utilisation de l'organe de fixation en terme d'épaisseur minimale ou maximale à serrer. La différence de profil et notamment le passage d'un profil droit de rainures concentriques à des rainures issues d'une forme spiralée ou hélicoïde ont pour but d'éviter ou de faciliter le desserrage qu'induit la présence d'un filetage."

### DESCRIPTION DE L'INVENTION

Partant de cet état de fait, la demanderesse a mené des recherches visant :
- d'une part, à améliorer les caractéristiques mécaniques obtenues au moyen d'un organe de fixation en deux parties,
- et d'autre part, à rendre ces caractéristiques techniques les plus régulières possibles malgré les variations de position de la bague selon que la fixation requise s'éloigne ou se rapproche des conditions limites d'utilisation.

Ces recherches ont abouti à la conception et à la réalisation d'une solution technologique non seulement applicable aux organes de fixation en deux parties mais également d'une manière plus générale à toute fixation comprenant au moins une broche à rainures ou gorges et au moins une bague venant se fixer par déformation sur lesdites rainures ou gorges.

L'organe de fixation de l'invention est du type comprenant une broche et une bague, ladite broche comprenant une tête à une extrémité et présentant sur son corps une première partie rainurée d'une pluralité de rainures ou gorges de blocage permettant à la bague s'engageant sur la broche, de venir s'y fixer par déformation et une deuxième partie rainurée à des fins de coopération avec un outil assurant la tenue de la broche pendant le filage de la bague sur la première partie rainurée,
une gorge de rupture facilitant le détachement de la deuxième partie une fois un seuil de contrainte franchi lors de la pose,

Selon l'invention, cet organe de fixation est remarquable en ce que ladite première partie rainurée de la broche est préformée pour présenter une succession de rainures non hélicoïdales dont le début et la fin sont constitués par des rainures de profils différents de celles identiques situées dans la partie centrale de ladite succession, le profil différent adoptant une profondeur identique mais une largeur supérieure à celles du profil des rainures situées en portion centrale de la succession.

La présence de profils différents dans la succession de rainures permet d'optimiser les caractéristiques mécaniques de la fixation obtenue. Leur présence en début et en fin de la succession de gorges préformées associée à celle de gorges identiques entre elles situées en partie intermédiaire dans la partie rainurée permet de garantir cette optimisation que ce soit dans une configuration de "grip mini" ou de "grip maxi".

En outre, le fait d'avoir une rainure plus large aux extrémités permet d'avoir un espace vide plus important à remplir par la bague. Plus cet espace vide est grand et moins il faut d'effort pour sertir la bague (il est plus facile de déformer la bague car elle ne vient pas au contact directement d'une cannelure).

Le fait que la succession de rainures n'adopte pas pas une structure hélicoïdale respecte la configuration de base d'un organe de fixation de type "lockbolt" et évite tout risque de desserrage par dévissage.

Selon une autre caractéristique particulièrement avantageuse de l'invention, les rainures de début et de fin de la succession de rainures qui sont de profils différents de celles situées en partie centrale sont identiques entre elles. En plus de faciliter la fabrication, une telle caractéristique tend à rendre équivalent le comportement mécanique de la fixation aussi bien en situation de "grip maxi" que de "grip mini".

D'autres caractéristiques particulièrement avantageuses sont susceptibles de s'associer à tout ou partie de celles déjà énoncées, ainsi par exemple :
- une seule rainure adopte un profil différent en début et en fin de succession;
- plusieurs rainures adoptent un profil différent en début et en fin de succession;
- ladite largeur des rainures différentes est sensiblement égale à 1,5 fois celle des rainures identiques situées en portion centrale de la succession;
- le profil différent est non symétrique;
- la tête de la broche est fraisée,
- la surface supérieure de la tête de la broche est bombée.

La demanderesse a imaginé une pluralité d'associations de matériaux dont une liste est proposée ci-après :
- la broche en aluminium série 7000 et la bague en aluminium série 6000
- la broche en titane TA6V et la bague en aluminium 2024 T42
- la broche en titane avec une résistance mécanique (Rm) supérieure à 1000MPa (TA6V, Ti6-6-2,...) et la bague en titane T40 (Rm) supérieure à 400MPa ou Titane Ti3A12.5V (Rm supérieure à 500MPa).

De manière générale, le matériau de la broche aura un indice Rm supérieur à 1.5 fois celui de la bague.

On notera néanmoins qu'en fonction de la taille et du nombre des rainures présentes aux extrémités, ce rapport de 1.5 pourra être réduit car plus lesdites rainures sont larges et plus l'effort de sertissage sera faible (il y a plus d'espace vide donc plus de facilité pour déformer la bague et remplir les rainures).

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un organe de fixation conforme à l'invention.

### BRÈVE DESCRIPTION DES DESSINS

La figure 1 est un dessin schématique d'un mode de réalisation d'un organe de fixation conforme à l'invention,
La figure 2 est un dessin schématique de la première partie rainurée d'une broche conforme à l'art antérieur,
La figure 3 est un dessin schématique de la première partie rainurée de la broche conforme à l'invention,
La figure 4 est un dessin schématique en coupe illustrant l'opération de pose d'un organe de fixation conforme à l'invention sur la base d'un "grip maxi" en début de pose,
La figure 5 reprend le dessin de la figure 4 en cours de déformation de la bague,
La figure 6 illustre la rupture de la broche,
La figure 7 est un dessin schématique en coupe illustrant l'opération de pose d'un organe de fixation conforme à l'invention sur la base d'un "grip mini" en début de pose,
La figure 8 reprend le dessin de la figure 4 en cours de déformation de la bague,
La figure 9 illustre la rupture de la broche.

### DESCRIPTION DES MODES DE RÉALISATION PRÉFÉRÉS

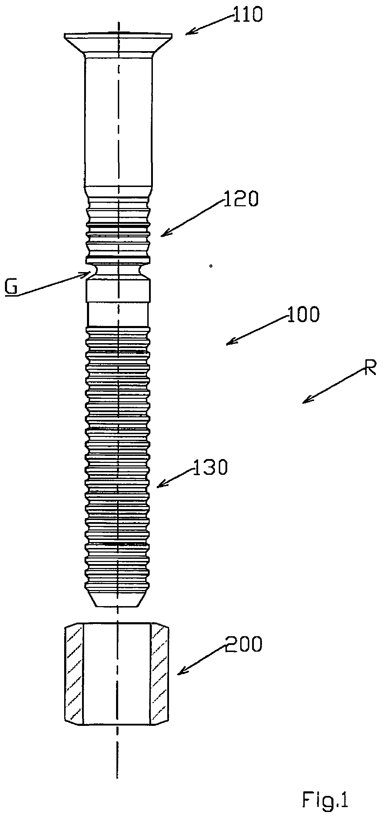

Tel qu'illustré sur le dessin de la figure 1, l'organe de fixation de l'invention est ici un rivet de type "lockbolt" référencé R dans son ensemble comprend deux parties :
une broche 100 et une bague 200.

Ladite broche 100 comprend à une extrémité une tête 110 qui est ici fraisée et présente sur son corps une pluralité de rainures ou gorges situées sur des parties différentes de ladite broche.

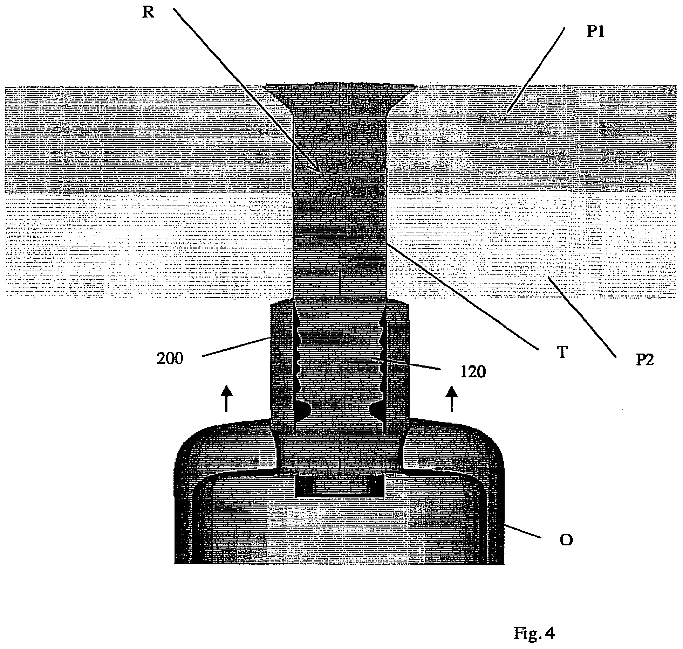

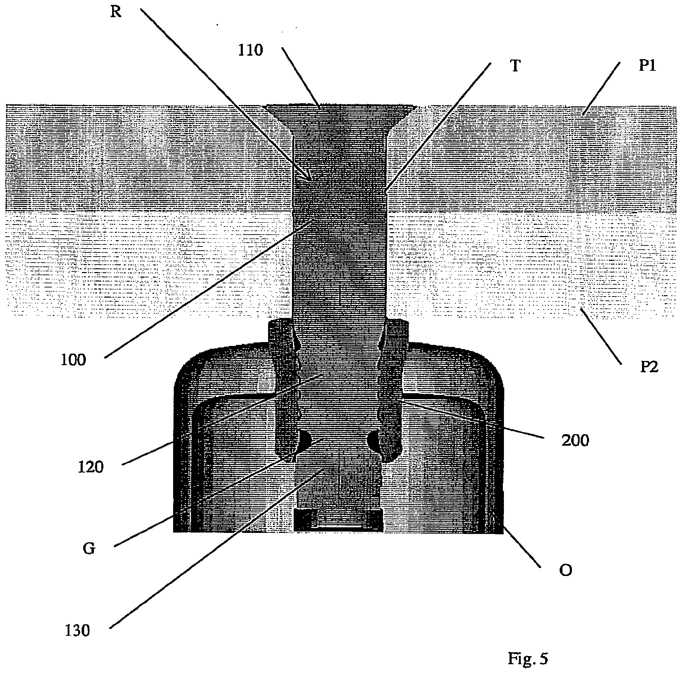

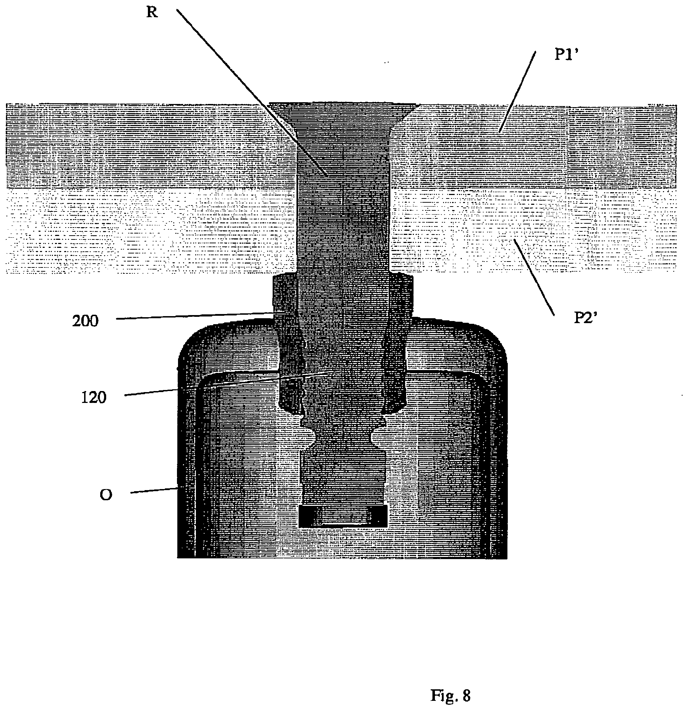

Plus précisément, ladite broche 100 comprend une première partie 120 rainurée à des fins de coopération avec la bague 200 et une deuxième partie 130 rainurée à des fins de coopération avec l'outil O (cf. figures 4, 5, 7, 8, 9) assurant la tenue de la broche 100 pendant le filage de la bague 200 sur la première partie rainurée 120.

Une gorge de rupture G facilite le détachement de la deuxième partie une fois un seuil de contrainte franchi lors de la pose.

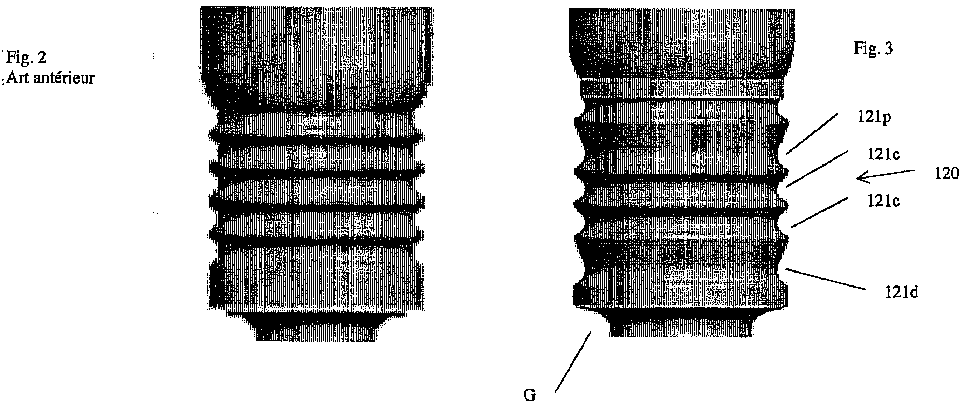

L'invention apparaît plus clairement dans la comparaison entre une première partie rainurée de l'art antérieur illustrée par le dessin de la figure 2 avec la première partie rainurée 120 du rivet R conforme à l'invention.

Il apparaît que les rainures préformées dans ladite première partie de l'art antérieur sont non hélicoïdales, identiques avec un pas, une profondeur et un profil identiques.

A contrario, ladite première partie rainurée 120 de la broche 100 du rivet conforme à l'invention, adopte une succession de rainures non hélicoïdales 121 où la première rainure 121p et la dernière rainure 121d sont identiques mais diffèrent de celles 121c disposées entre les deux. Ces rainures sont parallèles et présentent un plan de symétrie ou un plan médian perpendiculaire à l'axe longitudinal de la broche.

Comme illustrées, ces rainures de début et de fin 121p et 121c de la première partie rainurée 120 destinée à recevoir la bague, adoptent un pas différent et un profil non symétrique.

Ce profil présente une profondeur et une hauteur de nervures égales à celles du profil des rainures 121c mais avec une pente différente de part et d'autre du fond de la rainure.

Ainsi, dans le sens d'un éloignement de la tête, la pente reliant le bord haut de la rainure 121p est plus progressive que celle repartant du fond de la rainure pour rejoindre le deuxième bord haut. Selon un mode de réalisation préféré, la largeur des rainures 121p et 121c est égale à 1,5 fois celles des rainures 121c.

Il en est de même pour la rainure 121d alors que lesdites pentes de part et d'autre des fonds des rainures 121c sont égales.

Afin d'améliorer le comportement de la tête fraisée 110 lors des efforts de pose pour éviter le phénomène dit de parapluie, cette dernière présente avant pose, une surface supérieure légèrement bombée.

Selon un mode de réalisation préféré mais non limitatif, la préformation des rainures est mise en oeuvre par roulage.

Selon un autre mode de réalisation préféré, la bague est réalisé dans alliage aluminium de la série 6000 et la broche est réalisée dans un alliage aluminium de la série 7000.

Les figures 4, 5 et 6 illustrent la pose du rivet R dans une configuration de "grip maxi".

Comme illustré, le rivet R est installé dans un trou traversant et fraisé T aménagé dans les deux pièces P1 et P2 à des fins d'assemblage. La broche 100 est installée pour mettre en appui sa tête fraisée 110 sur la fraisure du trou T et la bague 200 est engagée sur la broche 100. Un outil O vient s'associer à la deuxième partie rainurée 130 de la broche 100 afin d'assurer, par traction sur la broche 100, la déformation de la bague 200 sur la première partie rainurée 120.

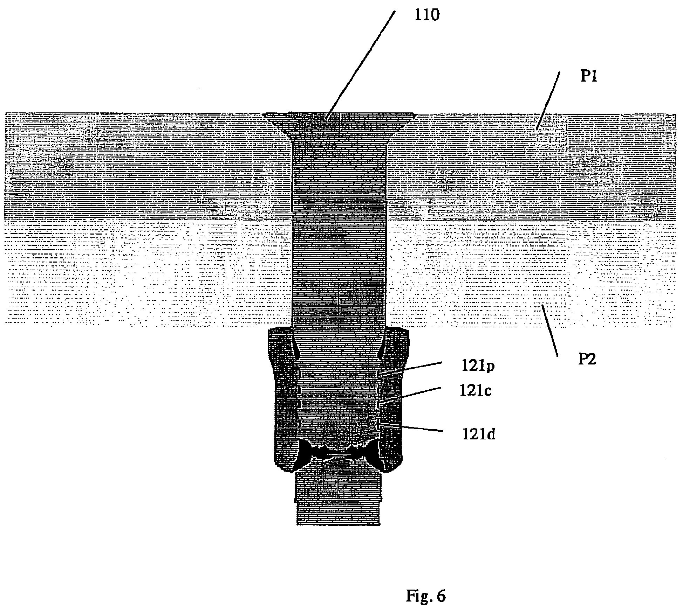

Il apparaît clairement, sur le dessin de la figure 6, que la surface intérieure de la bague 200 vient épouser au plus près, les rainures 121d et 121c et à une moindre mesure, la rainure 121p.

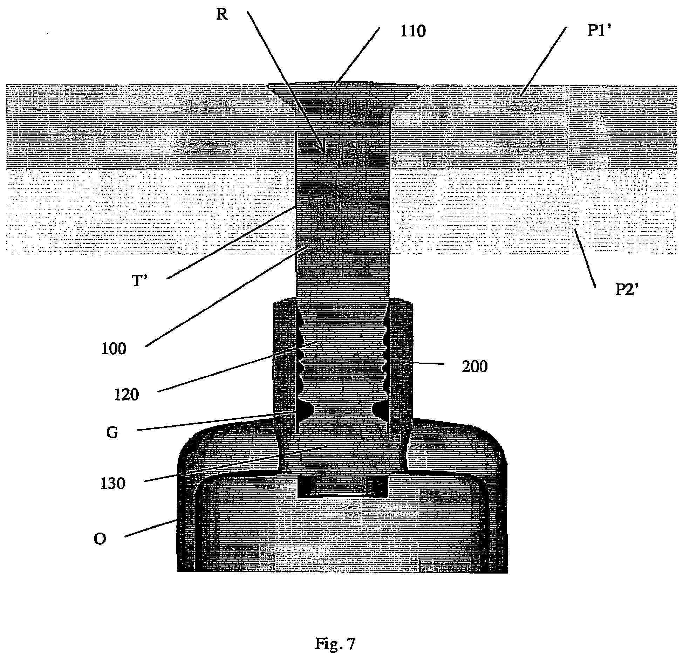

Les figures 7, 8 et 9 illustrent la pose du même rivet R dans une configuration de "grip mini".

Comme illustré, le rivet R est installé dans un trou traversant et fraisé T' aménagé dans les deux pièces P1' et P2' à des fins d'assemblage. La broche 100 est installée pour mettre en appui sa tête fraisée 110 sur la fraisure du trou T' et la bague 200 est engagée sur la broche. Le même outil O vient s'associer à la deuxième partie rainurée 130 de la broche 100 afin d'assurer, par traction sur la broche 100, la déformation de la bague 200 sur la première partie rainurée 120.

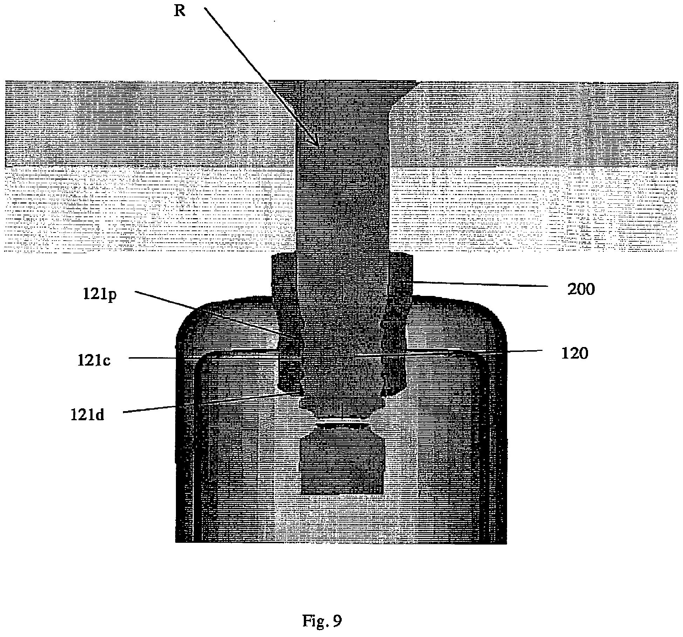

Il apparaît clairement, sur le dessin de la figure 9, que la surface intérieure de la bague 200 vient épouser au plus près, les rainures 121p et 121c et dans une moindre mesure, la rainure 121d.

La demanderesse a mené des tests sur la base de ces modes de réalisation permettant à la fixation obtenue, de présenter une tenue à l'arrachement équivalente à celle d'un rivet plein aussi bien sur une configuration de "grip mini" que sur configuration de "grip maxi". L'organe de fixation de l'invention dont un exemple vient d'être décrit remplit donc les objectifs de l'invention. Il apparaît également que le fait de minimiser l'effort de pose permet de réduire la gorge de rupture et ainsi de limiter l'effort de traction appliqué sur la tête de la broche. On limite ainsi la mise en parapluie de la tête.

On comprend que l'organe de fixation, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Organe de fixation (R) du type comprenant une broche (100) et une bague (200), ladite broche (100) comprenant une tête (110) à une extrémité et présentant sur son corps, une première partie rainurée (120) d'une pluralité de rainures ou gorges de blocage (121p, 121c, 121d) permettant à la bague (200) s'engageant sur la broche (100), de venir s'y fixer par déformation et une deuxième partie (130) rainurée à des fins de coopération avec un outil (O) assurant la tenue de la broche (100) pendant le filage de la bague (20)0 sur la première partie rainurée (120),
une gorge de rupture (G) facilitant le détachement de la deuxième partie une fois un seuil de contrainte franchi lors de la pose,
**CARACTÉRISÉ PAR LE FAIT QUE** ladite première partie rainurée (120) de la broche (100) est préformée pour présenter une succession de rainures non hélicoïdales (121p, 121c, 121d) dont le début et la fin sont constitués par des rainures (121p, 121d) de profils différents de celles (121c) identiques situées dans la partie centrale de ladite succession, le profil différent adoptant une profondeur identique mais une largeur supérieure à celles du profil des rainures (121c) situées en portion centrale de la succession.

2. Organe de fixation (R) selon la revendication 1, **CARACTÉRISÉ PAR LE FAIT QU'**une seule rainure adopte un profil différent en début (121p) et en fin (121d) de succession.

3. Organe de fixation (R) selon la revendication 1, **CARACTÉRISÉ PAR LE FAIT QUE** plusieurs rainures adoptent un profil différent en début et en fin de succession.

4. Organe de fixation (R) selon la revendication 1, **CARACTÉRISÉ PAR LE FAIT QUE** les rainures de début (121p) et de fin (121d) de la succession de rainures qui sont de profils différents de celles (121c) situées en partie centrale, sont identiques entre elles.

5. Organe de fixation (R) selon la revendication 1, **CARACTÉRISÉ PAR LE FAIT QUE** le profil différent est non symétrique.

6. Organe de fixation (R) selon la revendication 1, **CARACTÉRISÉ PAR LE FAIT QUE** la tête (110) de la broche (100) est fraisée.

7. Organe de fixation (R) selon la revendication 1, **CARACTÉRISÉ PAR LE FAIT QUE** la largeur des rainures différentes (121p, 121d) est sensiblement égale à 1,5 fois la largeur des rainures identiques (121c) de la partie centrale de la succession.

8. Organe de fixation (R) selon la revendication 1, **CARACTÉRISÉ PAR LE FAIT QUE** la surface supérieure de la tête (110) de la broche est bombée.

9. Organe de fixation (R) selon la revendication 1, **CARACTERISE PAR LE FAIT QU'**il comprend deux parties à savoir une broche (100) et une bague (200), ladite broche (100) comprenant une première partie rainurée (120) à des fins de coopération avec la bague (200) et une deuxième partie rainurée (130) des fins de coopération avec l'outil (O) assurant la tenue de la broche (100) pendant le filage de la bague (200) sur la première partie rainurée (120).

## Patentansprüche

1. Befestigungselement (R), eine Spindel (100) und einen Ring (200) umfassend, wobei die besagte Spindel (100) an einem Ende einen Kopf (110) umfasst, und auf ihrem Korpus einen ersten gerillten Abschnitt (120) mit 5einer Vielzahl von Sperrrillen oder Sperrnuten (121p, 121c, 121d) aufweist, die es dem Ring (200), der in die Spindel (100) eingreift, ermöglichen, sich dort durch Verformung zu fixieren, und einen zweiten gerillten Abschnitt (130) zum Zweck des Zusammenwirkens mit einem 10Werkzeug (0), das für den Halt der Spindel (100) während des Durchdrückens des Ringes (200) auf dem ersten gerillten Abschnitt (120) sorgt,
eine Brechnut (G), die die Trennung des zweiten Abschnitts erleichtert, sobald ein Belastungsgrenzwert 15beim Einbau überschritten wird,
**dadurch gekennzeichnet, dass** der besagte erste gerillte Abschnitt (120) der Spindel (100) vorgeformt ist, um eine Aufeinanderfolge von nicht spiralförmigen Rillen (121p, 121c, 121d) aufzuweisen, deren Anfang und 20Ende durch Rillen (121p, 121d) mit Profilen gebildet werden, die sich von jenen (121c) identischen unterscheiden, die sich im mittleren Abschnitt der besagten Aufeinanderfolge befinden, wobei das unterschiedliche Profil eine identische Tiefe, jedoch 25eine größere Breite einnimmt, als jene des Profils der Rillen (121c), die sich im mittleren Abschnitt der Aufeinanderfolge befinden.

2. Befestigungselement (R) nach Anspruch 1, **dadurch gekennzeichnet, dass** eine einzige Rille ein unterschiedliches Profil am Anfang (121p) und am Ende (121d) der Aufeinanderfolge einnimmt.

3. Befestigungselement (R) nach Anspruch 1, **dadurch gekennzeichnet, dass** mehrere Rillen ein unterschiedliches 5Profil am Anfang und am Ende der Aufeinanderfolge einnehmen.

4. Befestigungselement (R) nach Anspruch 1, **dadurch gekennzeichnet, dass** die Rillen am Anfang (121p) und am Ende (121d) der Aufeinanderfolge an Rillen, die 10 unterschiedliche Profile aufweisen, als jene (121c), die sich im mittleren Abschnitt befinden, untereinander identisch sind.

5. Befestigungselement (R) nach Anspruch 1, **dadurch gekennzeichnet, dass** das unterschiedliche Profil nicht 15 symmetrisch ist.

6. Befestigungselement (R) nach Anspruch 1, **dadurch gekennzeichnet, dass** der Kopf (110) der Spindel (100) ein Senkkopf ist.

7. Befestigungselement (R) nach Anspruch 1, dadurch 20 gekennzeichnet, dass die Breite der unterschiedlichen Rillen (121p, 121d) in etwa gleich 1,5 Mal der Breite der identischen Rillen (121c) des mittleren Abschnitts der Aufeinanderfolge ist.

8. Befestigungselement (R) nach Anspruch 1, dadurch 25 gekennzeichnet, dass die obere Oberfläche des Kopfes (110) der Spindel gewölbt ist.

9. Befestigungselement (R) nach Anspruch 1, **dadurch gekennzeichnet, dass** es zwei Abschnitte, nämlich eine Spindel (100) und einen Ring (200) umfasst, wobei die 30besagte Spindel (100) einen ersten gerillten Abschnitt (120) zum Zweck des Zusammenwirkens mit dem Ring (200) umfasst, und einen zweiten gerillten Abschnitt (130) zum Zweck des Zusammenwirkens mit dem Werkzeug (0), das für den Halt der Spindel (100) während des Durchdrückens des Ringes (200) auf dem ersten gerillten Abschnitt (120) sorgt.

## Claims

1. Fastening member (R) of the type comprising a pin (100) and a ring (200), said pin (100) comprising a head (110) at one end and having on the body thereof a first grooved portion (120) with a plurality of locking grooves or slots (121p, 121c, 121d) enabling the ring (200) engaged on the pin (100) to fasten thereto by means of deformation and a second grooved portion (130) for engaging with a tool (0) for holding the pin (100) during the extrusion of the ring (200) on the first 1grooved portion (120),
a rupture slot (G) facilitating the detachment of the second portion once a stress threshold has been exceeded during fitting,
**characterized in that** said first grooved 1portion (120) of the pin (100) is preformed to have a sequence of non-helical grooves (121p, 121c, 121d), the start and end whereof are formed by grooves (121p, 121d) having different profiles to the identical grooves (121c) situated in the central portion of said sequence, the different profile adopting an identical depth but a greater width to those of the profile of the grooves (121c) situated in the central portion of the sequence.

2. Fastening member (R) according to claim 1,
**characterized in that** a single groove adopts a different profile at the start (121p) and end (121d) of the sequence.

3. Fastening member (R) according to claim 1,
**characterized in that** a plurality of grooves adopt a different profile at the start and end of the sequence.

4. Fastening member (R) according to claim 1,
**characterized in that** the start (121p) and end (121d) grooves of the sequence of grooves which have different profiles to those (121c) situated in the central portion, are mutually identical.

5. Fastening member (R) according to claim 1,
**characterized in that** the different profile is non-symmetrical.

6. Fastening member (R) according to claim 1,
**characterized in that** the pin (100) head (110) is countersunk.

7. Fastening member (R) according to claim 1,
**characterized in that** the width of the different grooves (121p, 121d) is substantially equal to 1.5 times that of the identical grooves (121c) of the central portion of the sequence.

8. Fastening member (R) according to claim 1,
**characterized in that** the top surface of the pin head (110) is convex.

9. Fastening member (R) according to claim 1,
**characterized in that** it comprises two parts, that is a pin (100) and a ring (200), said pin (100) comprising a first grooved portion (120) for engaging with the ring (200) and a second grooved portion (130) for 25 engaging with the tool (0) for holding the pin (100) during the extrusion of the ring (200) on the first grooved portion (120).
